Europäisches Patentamt

European Patent Office

Office européen des brevets

(11) Publication number: **0 481 553 A1**

# EUROPEAN PATENT APPLICATION

(21) Application number: **91202623.4**

(22) Date of filing: **09.10.91**

(51) Int. Cl.5: **A46B 15/00, A61C 17/22**

(30) Priority: **15.10.90 DE 4032691**

(43) Date of publication of application:
**22.04.92 Bulletin 92/17**

(84) Designated Contracting States:
**AT BE CH DE DK ES FR GB GR IT LI LU NL SE**

(71) Applicant: **THE PROCTER & GAMBLE COMPANY**
**One Procter & Gamble Plaza**
**Cincinnati Ohio 45202(US)**

(72) Inventor: **Uhlig, Rainer Curt Alexander**
**Waldstrasse 61**
**W-6500 Mainz(DE)**

(74) Representative: **Suslic, Lydia et al**
**Procter & Gamble European Technical**
**Center N.V. Temselaan 100**
**B-1853 Strombeek-Bever(BE)**

(54) **Electrically driven toothbrush.**

(57) Electrically driven toothbrush, which is provided with a device for acoustic indication when a certain contact pressure is exceeded, having an electric drive (2,3), which is mounted movably inside the housing (1), transversely to the brush shaft (4), and is supported against the housing (1) by means of a spring element (9), the drive shaft (4) connected to the drive motor bearing a spur wheel (6) which, upon corresponding deflection of the drive about its point of rotation, comes into contact with a leaf spring (8) fitted to the housing (1) and thereby makes the leaf spring (8) vibrate, a perceptible noise being produced by the housing acting as a resonator.

FIG. 1

The present invention relates to an electric toothbrush which is equipped with an acoustically perceptible indication when a certain contact pressure of the attached brush is exceeded during teeth cleaning.

According to recent findings in dental medicine, it is known that the exertion of an increased pressure by the toothbrush during teeth cleaning after some time causes a recession of the gums, which can result in exposure of the cervices of the teeth and is referred to as "sphenoid defects".

Therefore, it has already been proposed to equip manual and, in particular, also electrically driven toothbrushes with devices in which the optimum pressure range is stored and which initiate an optical or acoustic signal, detectable by the user, in the event of a deviation from this pressure range.

For instance, EPA 158,870 describes a relevant electric toothbrush in which there is fitted to the journal bearing, provided for receiving the shank of the brush, a pressure pick-up, which records the contact pressure effective at the attached brush during teeth cleaning and which is connected to a microprocessor, in which a set pressure value is stored, which is compared with the actual pressure value effective at the brush, the microprocessor being coupled to a signal transmitter in such a way that a signal is initiated in the event of the stored set contact pressure being exceeded or not reached.

Although this toothbrush outstandingly achieves this object, the required electronic complexity is relatively high, so such a brush is relatively expensive for a mass product.

EPA 221,296 discloses a similar electric toothbrush, where the contact pressure is measured by means of the power consumption of the electric motor of the brush and deviations of the power consumption value set in correlation with a defined optimum pressure range are transmitted to the user via a signal transmitter. In this case as well, it is in fact a relatively complicated device for a mass article.

Therefore, the object was to develop an electric toothbrush of the category defined at the beginning which clearly indicates to the user an exceeding of the optimum contact pressure, but is of a simple design and can consequently be produced inexpensively.

The way in which this object is constructionally achieved is that the drive part of an electric toothbrush is mounted movably inside a housing, transversely to the brush shaft, and is supported against the housing by means of a spring element, the drive shaft connected to the drive motor bearing a spur wheel which, upon corresponding deflection of the drive part about its point of rotation, comes into contact with a leaf spring fitted to the housing and thereby makes the leaf spring vibrate, a perceptible noise being produced by the housing acting as a resonator.

The pressure at which, when exceeded, the effect described occurs can be determined by setting of the spring element, the limiting range lying at an expenditure of force of no more than 2,500 mN.

An exemplary embodiment of an electric toothbrush according to the invention is reproduced in the drawings:

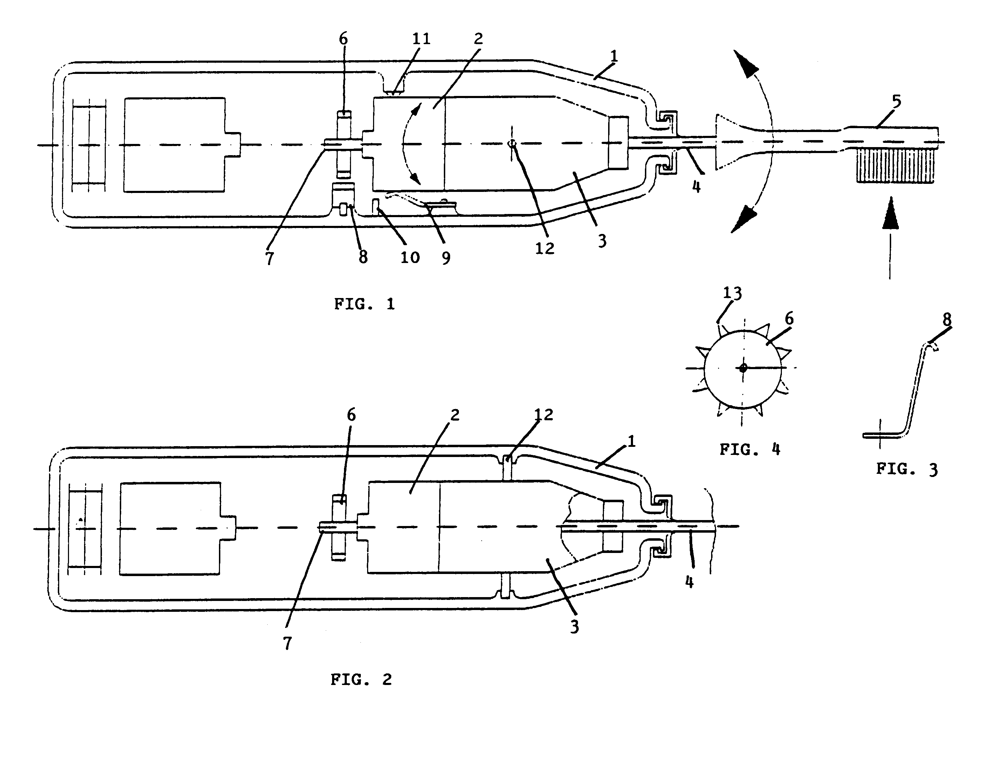

Figures 1 and 2 show a cross-section through an electric toothbrush. Accommodated in the housing (1) is a drive unit (2, 3), which is connected via a shaft (4) to an attached brush (5). The drive unit (2, 3) is held in a position of rest in the housing (1) by the spring element (9) and the support (11). The drive shaft (7) bears a spur wheel (6) which, as shown in Figure 4, is provided with teeth (13).

During operation of the brush, i.e. when the attached brush (5) is pressed against the teeth, at a certain pressure, for example 2 - 2.5 N, to which the spring (9) is set, the drive unit (2, 3) is deflected out of its position of rest in such a way that the teeth of the spur wheel (6) contact the leaf spring (8), which is shown enlarged in Figure 3. By this contact with the leaf spring (8), which is connected to the housing (1), a noise which can be perceived by the user is produced, since the housing (1) acts as a resonator. The deflection of the drive unit (2, 3) is in this case limited by the stop (10). The noise level achieved by the pressure of the spring (8) against the housing (1) is in this case dependent on the contact pressure of the attached brush (5). (12) denotes the point of rotation.

## Claims

1. Electrically driven toothbrush, which is provided with a device for acoustic indication when a certain contact pressure is exceeded, having an electric drive (2, 3), which is mounted movably inside the housing (1), transversely to the brush shaft (4), and is supported against the housing (1) by means of a spring element (9), characterized in that the drive shaft (7) connected to the drive motor (2, 3) bears a spur wheel (6) which, upon corresponding deflection of the drive (2, 3) about its point of rotation (12), comes into contact with a leaf spring (8) fitted to the housing (1) and thereby makes the leaf spring (8) vibrate, a perceptible noise being produced by the housing (1) acting as a resonator.

FIG. 1

FIG. 4

FIG. 3

FIG. 2

EP 0 481 553 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 158 870 (BLENDAX-WERKE R.SCHNEIDER) <br> * claims 1-3; figure 1 * * <br> – – – | 1 | A 46 B 15/00 <br> A 61 C 17/22 |
| A | GB-A-2 097 663 (WURTTEMBERGISCHE PARFUMERIE-FABRIK) <br> * page 2, line 20 - page 3, line 28; figures * * <br> – – – | 1 | |
| A | DE-A-2 016 984 (SUNBEAM) <br> * page 2, paragraph 3 - page 3, paragraph 4; figures 1,3 * * <br> – – – | 1 | |
| A | US-A-2 877 477 (LEVIN) <br> * figures * * <br> – – – – – | 1 | |

|  | TECHNICAL FIELDS SEARCHED (Int. Cl.5) |
|---|---|
|  | A 46 B <br> A 61 C |

The present search report has been drawn up for all claims

| Place of search | Date of completion of search | Examiner |
|---|---|---|
| The Hague | 09 January 92 | ERNST R.T. |